Europäisches Patentamt

**European Patent Office**

Office européen des brevets

(19)

(11) Numéro de publication : **0 014 664**
**B1**

(12)

# FASCICULE DE BREVET EUROPÉEN

(45) Date de publication du fascicule du brevet :
**20.04.83**

(51) Int. Cl.³ : **B 65 D 25/14**

(21) Numéro de dépôt : **80400196.4**

(22) Date de dépôt : **08.02.80**

---

(54) **Procédé et machine pour la fabrication d'articles composites, notamment barquette de conditionnement de produits périssables.**

---

(30) Priorité : **09.02.79 FR 7903921**
**28.12.79 FR 7932039**

(43) Date de publication de la demande :
**20.08.80 Bulletin 80/17**

(45) Mention de la délivrance du brevet :
**20.04.83 Bulletin 83/16**

(84) Etats contractants désignés :
**AT BE CH DE GB IT LU NL SE**

(56) Documents cités :
**DE A 2 350 809**
**FR A 1 249 532**
**FR A 1 596 713**
**FR A 2 279 534**
**GB A 991 906**
**US A 2 993 806**

(73) Titulaire : **"Lauragri S.A." Société anonyme dite:**
**Route Nationale 7**
**F-13550 Noves (FR)**

(72) Inventeur : **Gras, Augustin Henri**
**"La Florestine"**
**F-30650 Rochefort du Gard (FR)**

(74) Mandataire : **Bugnon-Hays, Claudine**
**PATCO S.A. 45, Boulevard Albin Durand**
**F-84200 Carpentras (FR)**

Jouve, 18, rue St-Denis, 75001 Paris, France

Procédé et machine pour la fabrication d'articles composites, notamment barquette de conditionnement de produits périssables.

La présente invention concerne un procédé pour la fabrication d'un article de conditionnement du type barquette pour des produits périssables, tels que viande fraîche et autres denrées alimentaires, ledit article étant conçu pour permettre le stockage et la présentation hygiénique de ces produits sous un film synthétique enveloppant barquette et produit.

On connaît déjà des procédés pour la réalisation des articles de conditionnement de ce type constitués d'un fond en matière plastique associé à un revêtement métallique associé à sa face interne et destiné à venir en contact avec le produit conditionné. Ce revêtement interne est constitué en général par une feuille métallique posée ou collée sur le fond. Ces articles sont onéreux à la fabrication étant donné qu'il faut utiliser un métal compatible avec les aliments, notamment l'aluminium.

Le brevet français n° FR-A-2 279 534 décrit un autre procédé pour réaliser des objets thermoformés à partir d'un laminé thermoplastique comprenant une feuille de structure cellulaire et une feuille d'une structure non cellulaire. Dans ce cas, la feuille non cellulaire porte sur sa surface extérieure, un revêtement métallique. Mais suivant ce procédé, la solidarisation des deux feuilles est réalisée en portant les deux feuilles à une température proche ou égale à leur température de ramollissement, en les soumettant à une pression par calandrage et en procédant immédiatement à leur thermoformage dans une enceinte fermée et chauffée. Seule, la combinaison chauffage, serrage et thermoformage semble pouvoir assurer la solidarisation entre les deux feuilles. Mais lorsqu'on utilise un revêtement métallique de très faible épaisseur qui puisse résister ensuite à un arrachement, les températures utilisées pour la solidarisation des deux feuilles risquent de détériorer le revêtement métallique.

La présente invention a pour objet de concevoir un procédé permettant de remédier auxdits inconvénients des procédés connus et de réaliser une solidarisation parfaite des deux feuilles d'une manière sûre et simple sans risque de détérioration du revêtement métallique.

Le procédé selon l'invention consiste à opérer la solidarisation de l'élément de base en matière plastique et de la face métallisée de la pellicule en intercalant entre eux un film intermédiaire de matière plastique maintenu à une température assurant son ramollissement au moins superficiel et permettant une adhérence du film avec la matière de l'élément et avec celle de la pellicule, la solidarisation étant effectuée sous l'action d'une pression au moins locale dans la zone de solidarisation. L'utilisation d'une pellicule de matière plastique métallisée permet de n'employer que très peu de métal, en couche de seulement quelques centièmes ou millièmes de microns, la résistance mécanique étant assurée par la pellicule de matière plastique qui, elle également, sera avantageusement d'épaisseur faible (par exemple moins de 30 μ).

Lorsqu'on travaille avec une pellicule métallisée de si faible épaisseur, l'expérience montre qu'il est pratiquement impossible d'obtenir un soudage direct de la pellicule sur l'élément de base en matière plastique.

En effet, d'une part, pour obtenir une bonne solidarisation, il faut rendre adhérentes les matières plastiques en contact par un apport de chaleur important, mais d'autre part, cet apport de chaleur risque de détériorer la couche métallique. L'interposition d'un film intermédiaire préconisée par la présente invention permet de résoudre ce paradoxe dans des conditions excellentes. Pour cela, on fait en sorte que les faces du film intermédiaire se trouvent, au moment de la solidarisation, à une température telle que la matière du film soit à l'état pâteux au moins superficiellement, tandis que les surfaces de l'élément de base et de la pellicule qui sont destinées à venir en contact avec le film sont chauffées à une température inférieure à la température de ramollissement de la matière qui les constitue.

On évite ainsi de porter la couche métallique à une température excessive qui entraînerait sa détérioration, notamment dans le cas préféré où l'on utilise de l'aluminium.

Avantageusement, le procédé de l'invention peut permettre la fabrication en continu d'une pluralité d'articles composites à partir d'un élément de base en matière plastique et d'une pellicule métallisée (par exemple aluminisée) se présentant sous forme de bandes continues séparées.

Dans ce cas, selon l'invention :

— on déroule simultanément l'élément et la pellicule aluminisée et on les fait circuler entre cylindres de calandrage, la face non aluminisée de la pellicule étant en regard de l'élément en bande,

— et on extrude un film de matière plastique continu qu'on insère entre l'élément et la face non aluminisée de la pellicule en le maintenant à une température au moins égale à son point de ramollissement,

— en suite de quoi on opère le thermoformage et la découpe de la bande composite pour obtenir les articles.

Naturellement, il convient que les matières plastiques utilisées soient compatibles et selon un aspect de l'invention, l'élément de base sera du polystyrène expansé tandis que la pellicule métallisée sera constituée par un film de polystyrène revêtu d'une couche d'aluminium, le film intermédiaire étant également du polystyrène non expansé (polystyrène choc ou demi-choc).

La demanderesse a pu déterminer par ailleurs que le procédé de l'invention, dans le cas de la réalisation de barquette de conditionnement de produits alimentaires utilisant un élément de base en polystyrène expansé d'environ 3 mm d'épaisseur, une pellicule de polystyrène aluminisé sur une face d'environ 25 μ d'épaisseur et un film de polystyrène intermédiaire d'environ 30 μ d'épaisseur, assurait une solidarisation parfaite des strates entre elles et respectait intégralement les caractéristiques de l'aluminium (fonction d'isolation, aspect extérieur brillant, etc...) lorsque l'on espérait selon les conditions suivantes :

— maintien du cylindre de calandre en contact avec la couche d'aluminium à une température comprise entre 90 et 110 °C et de préférence entre 94 et 104 °C,

— maintien de la filière d'extrusion du film intermédiaire à une température comprise entre 225 et 240 °C,

— écartement de la filière et de la zone de contact entre l'élément de base et la pellicule aluminisée aussi faible que possible, soit inférieur à 5 cm et de préférence compris entre 2 et 2,5 cm,

— pression exercée entre les cylindres de calandre comprise entre 4 et 5 bars (ou kg/cm²) avec un écartement entre eux légèrement inférieur à l'épaisseur de l'élément en polystyrène expansé.

On comprendra toutefois que ces conditions opératoires sont des conditions optimales. Elles peuvent varier selon plusieurs paramètres, à savoir notamment :

— épaisseur de la pellicule aluminisée et notamment de la couche d'aluminium (on pourra travailler à des températures plus hautes si l'épaisseur est augmentée),

— débit de la filière du film intermédiaire de polystyrène. Ainsi, si on augmente le débit du film (donc l'épaisseur de celui-ci) on pourra utiliser des températures de filière plus basse,

— température de la filière.

On notera que le réglage de ces paramètres sera guidé par l'aspect de la couche d'aluminium examiné sur les articles finis.

L'invention concerne enfin une machine pour la mise en œuvre du procédé de l'invention et comportant, comme dans FR-A-2 279 534 :

— une calandre constituée d'au moins deux cylindres tournant en sens contraire,

— des moyens pour alimenter la calandre

— d'une part, en matière plastique expansée se présentant sous forme d'une bande défilante,

— d'autre part, en pellicule métallisée sur une face se présentant également sous forme d'une bande défilante. Elle se caractérise en ce qu'elle comporte en outre des moyens pour introduire dans la calandre et entre l'élément expansé et la face non métallisée de la pellicule, le film intermédiaire de matière plastique compatible avec l'élément expansé et la pellicule afin de réaliser leur solidarisation.

Les moyens pour délivrer le film intermédiaire sont constitués par une extrudeuse alimentant une filière plate dont l'orifice de sortie est sensiblement rectangulaire, la longueur de ladite filière s'étendant dans une direction parallèle aux axes des cylindres et étant au moins égale à la largeur de la bande de matière plastique expansée et de la pellicule métallisée.

On décrira, à présent, l'invention en référence aux dessins annexés donnés à titre d'exemple non limitatif et dans lesquels :

La figure 1 représente en perspective, avec arrachement partiel, une barquette de conditionnement obtenue selon le procédé préféré de l'invention ;

La figure 2 représente schématiquement une coupe transversale de la barquette de la figure 1 ;

La figure 3 est une vue schématique de dessus d'une machine selon l'invention ;

La figure 4 est une vue schématique en élévation de la machine de la figure 3 ;

La figure 5 est une vue en perspective schématique à plus grande échelle de la calandre de la machine ;

La figure 6 est un détail en perspective coupé représentant la filière de l'extrudeuse délivrant le film intermédiaire et

La figure 7 représente schématiquement, à échelle agrandie, la zone de solidarisation de la calandre.

Comme on l'a indiqué plus haut la barquette fabriquée suivant le procédé selon l'invention peut être réalisée à partir d'un fond en polystyrène expansé 1 dont la face interne est revêtue d'une couche d'aluminium pulvérisé sous vide. Ce type de barquette n'a pas été représenté.

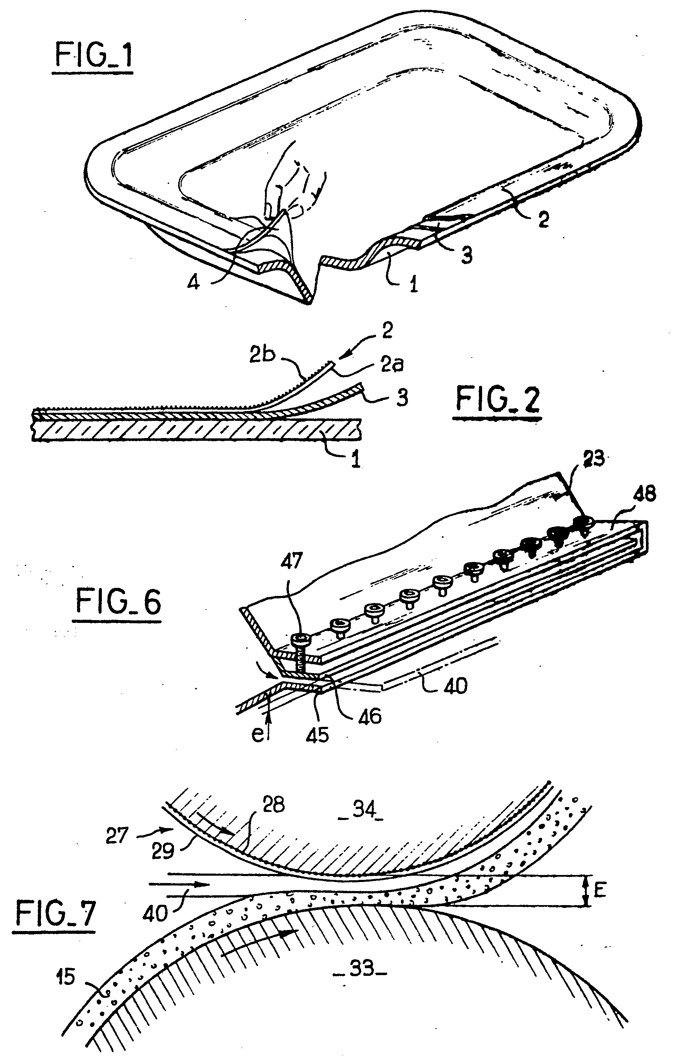

A la figure 1, on a représenté une barquette de conditionnement de produits consommables, par exemple de la viande, destinée à être complétée après mise en place du produit par une enveloppe (film de matière plastique) recouvrant à la fois le produit et la barquette. Cette barquette, réalisée selon le procédé préféré de l'invention comporte un élément de base 1 réalisé en polystyrène expansé qui assure la tenue mécanique de l'article. La face interne de la barquette est couverte d'une pellicule aluminisée 2 constituée d'un film polystyrène 2a dont la face externe (voir figure 2) est aluminisée, c'est-à-dire revêtue d'une couche d'aluminium 2b par tout procédé connu approprié. Cette couche peut être d'une épaisseur de l'ordre de 0,05 à 0,1 μ.

Avantageusement, on utilise comme support de la couche d'aluminium, un film polystyrène biorienté disponible dans le commerce.

Ce film est transparent et après aluminisation, la pellicule aluminisée 2 est brillante sur ses deux faces. Si on gratte la face externe de la pellicule couvrant la barquette, on élimine la couche brillante d'aluminium et apparaît par transparence la couleur blanc laiteux du polystyrène expansé.

Entre la pellicule 2 et l'élément 1 en polystyrène expansé est intercalé un film de polystyrène intermédiaire 3 servant de matière d'apport pour assurer la solidarisation lors du soudage de l'ensemble comme on l'a indiqué plus haut.

Sur la barquette constituée, lorsqu'on tente de détacher la pellicule comme on le voit à la figure 1, la matière du film 3 est adhérente au polystyrène de la pellicule. La face interne 4 de la partie détachée présente, en effet, un aspect blanchâtre plus terne que la face 2a naturelle de la pellicule. C'est le signe que le film 3 adhère bien à la pellicule 2. En grattant avec précaution la face interne 4 de la partie détachée, on peut éliminer le film 3 et on retrouve l'aspect brillant initial de la pellicule 2.

L'adhérence du film contre le polystyrène expansé est moins forte en raison de la structure alvéolaire du polystyrène expansé.

On notera qu'avantageusement, dans la face métallisée de la barquette sont conformées des dépressions D (figure 1 et 2) qui constituent des micro-cannelures ayant pour fonction de retenir les écoulements sanguins des viandes fraîches, des jus ou des suintements de tous produits alimentaires. Par effet de capillarité et de tension superficielle, elles retiennent les fluides qui ne s'étalent plus, sans toutefois dégrader la denrée par leur contact. L'effet « absorbant » de ces micro-cannelures est tel que même en cas de renversement, le fluide répandu le long de ces dernières ne se déplace pas et reste « captif » de ces canaux capillaires. Par ailleurs, ces cannelures peuvent présenter la forme de rainures ou de guillochage. Le fond des dépressions D demeure écarté de la denrée conditionnée qui repose seulement sur les parties en saillies du fond.

On décrira à présent une machine permettant la mise en œuvre du procédé de l'invention.

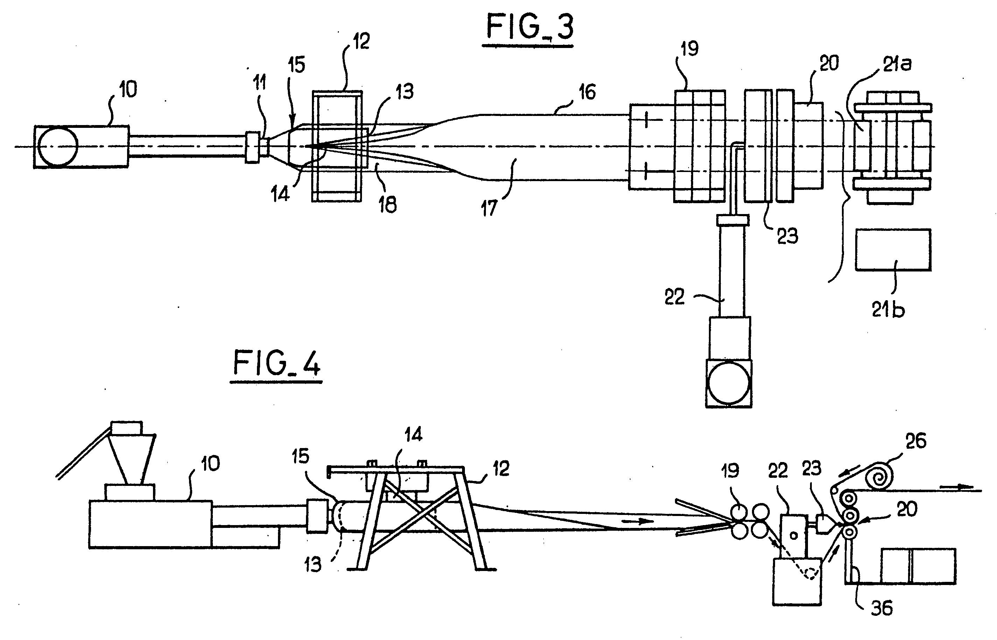

La machine représentée aux figures 3 et 4 comporte une extrudeuse 10 dont la filière délivre un élément de polystyrène expansé qui dans l'exemple représenté sort sous la forme d'un tube 15, la filière 11 étant tubulaire et un mandrin 13 porté par un bâti 12 étant prévu ; le bâti comporte, au-dessus du mandrin 13, une lame de découpe 14 qui ouvre le tube selon une génératrice supérieure, l'élément de polystyrène s'ouvrant ensuite sous forme d'une bande plane 16 ; la paroi externe 18 du tube, lissée par le passage dans la filière se trouve donc au-dessous et la paroi interne 17, plus rugueuse, au-dessus. C'est sur cette paroi interne que se trouvera soudé le film intermédiaire, la paroi externe 18 de meilleur aspect servant à constituer la face inférieure de la barquette.

La bande 16 de polystyrène expansé dont l'épaisseur est d'environ 3 mm est tirée par un appareil de traction classique 19 qui est suivi par une calandre 20 qui sera décrite en détail plus loin. Entre l'appareil de traction et la calandre est située la filière plate 23 d'une extrudeuse 22 délivrant le film de polystyrène intermédiaire.

A la sortie de la calandre, l'ensemble constitué par la pellicule aluminisée solidarisée avec la bande de polystyrène expansé est :

— soit enroulé sur un enrouleur 21a pour être stocké en attendant d'être repris,

— soit directement acheminé sous une unité de presse et de découpe schématisée en 21b qui opère le formage (à chaud de préférence) et la découpe de la bande afin d'obtenir une pluralité de barquettes telles que celle de la figure 1.

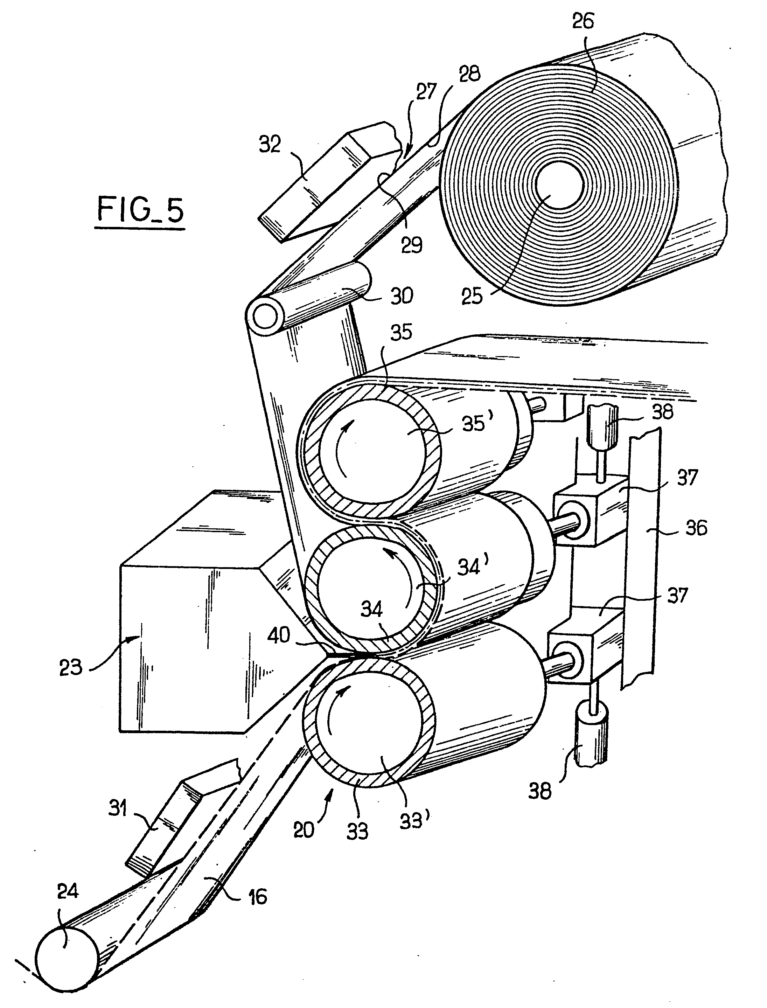

La pellicule aluminisée 27 d'une épaisseur de l'ordre de 25 µ (voir figure 5) est déroulée d'un rouleau 26 monté sur un axe 25 porté par le bâti de la machine, de telle sorte que la couche d'aluminium se trouve sur la face interne 28, le film 29 de polystyrène étant à l'extérieur. La pellicule 27 est guidée sur un rouleau 30.

Avant d'aboutir à la calandre 20, le film 29 de polystyrène de la pellicule 27 est échauffé par un système de chauffage 32 (par exemple à infrarouge) à une température de 70 à 85 °C. De même, la face externe de la bande 16 est chauffée de la même manière à une température de 80 à 95 °C, température inférieure à la température de ramollissement du polystyrène.

La calandre est constituée de trois cylindres 33, 34, 35 dont les axes s'étendent horizontalement dans un même plan vertical. Les cylindres sont portés par le bâti 36 de la machine et au moins les deux cylindres inférieurs 33 et 34 sont réglables l'un par rapport à l'autre afin d'ajuster l'espace E qui les sépare. A cet effet, les axes de ces cylindres peuvent être logés dans des paliers 37 coulissant dans le bâti 36 sous l'effet de vérins 38, par exemple à air comprimé.

Le cylindre 33 sur lequel passe la bande 16 de polystyrène expansé tourne en sens horaire, tandis que le cylindre 34 sur lequel passe la pellicule 27 tourne en sens anti-horaire. Le troisième cylindre 35 tourne dans le même sens que le cylindre 33.

L'écartement E entre les cylindres 33 et 34 est réglé de façon à être légèrement inférieur à l'épaisseur de la bande 16 afin d'exercer une pression sur l'ensemble des bandes au moment de la solidarisation. Dans l'exemple représenté, la pression exercée entre les cylindres dans la zone de solidarisation est d'environ 4 à 5 bars (ou kg/cm$^2$).

En amont de la calandre est montée, sur le bâti de la machine, la filière plate 23 de l'extrudeuse 22 qui délivre le film intermédiaire 40. Cette filière qui a une longueur au moins égale à celle de la bande 16, comporte deux lèvres 45, 46 sensiblement parallèles et écartées d'une distance « e » qui dans le cas de la fabrication de la barquette de la figure 1 permet de délivrer en continu un film de polystyrène de 30 µ d'épaisseur environ.

De façon avantageuse, la lèvre 46 est semi-rigide et l'écartement « e » peut être modifié de place en place par des vis de réglage 47 engagées dans des taraudages d'une plaque fixe 48 et dont l'extrémité libre appuie sur la lèvre 46. Ainsi peut être modulé le débit de la filière dans le sens de la longueur de celle-ci.

L'orifice de sortie de la filière est situé dans un plan transversal (sensiblement perpendiculaire) au plan vertical passant par les axes des cylindres de la calandre et entre les génératrices en regard des cylindres 33 et 34.

De plus, cet orifice de sortie doit être aussi proche que possible de la zone de contact entre la bande 16 et la pellicule 27. Dans l'exemple représenté, cet orifice est situé à moins de 5 cm de cette zone et de préférence entre 2 et 2,5 cm. La température de la filière dépasse 200 °C et de préférence est réglée entre 225 et 240 °C.

Par ailleurs, le cylindre 34 est chauffé à une température comprise entre 90 et 110 °C selon l'épaisseur de la pellicule aluminisée et de préférence entre 94 et 104 °C pour une épaisseur de pellicule de 25 μ environ.

Le cylindre 35 sera également chauffé à une température similaire.

En revanche, le cylindre 33 sera refroidi pour demeurer à la température ambiante d'environ 20 à 35 °C.

Le chauffage des cylindres peut se faire par circulation de fluide caloporteur à l'intérieur 34', 35' évidé des cylindres. De même, le refroidissement du cylindre 33 pourra se faire par circulation à l'intérieur 33' d'un fluide de refroidissement.

Par le réglage approprié des températures au niveau de la calandre, on réalise une bonne adhérence des diverses couches sans détérioration de l'aluminium, notamment quant à son aspect.

Cela tient au fait que la pellicule aluminisée est maintenue par le cylindre 34 à une température suffisamment basse pour ne pas détériorer le métal. Cependant, cette température n'est pas suffisante pour assurer le ramollissement de la pellicule de polystyrène nécessaire au collage. L'apport de température supplémentaire est fourni par le film 40 qui, lui est à l'état pâteux superficiellement. L'apport de température reste néanmoins dans des limites empêchant la détérioration du métal car une partie importante de la température du film est absorbée par le polystyrène expansé et par le cylindre refroidi 33.

## Revendications

1. Procédé pour la fabrication d'un article composite, notamment une barquette pour le conditionnement de produits périssables, à partir d'un élément (1) en une matière plastique et d'une pellicule de matière plastique (2) dont une seule face est métallisée, l'élément (1) et la pellicule (2) étant assemblés à chaud par calandrage, caractérisé en ce qu'on opère la solidarisation de l'élément (1) et de la face non métallisée de la pellicule (2) en intercalant entre eux un film intermédiaire (3) de matière plastique maintenu à une température assurant au moins superficiellement son ramollissement et permettant une adhérence du film (3) avec la matière de l'élément (1) et avec celle de la pellicule (2), une pression étant exercée dans la zone de solidarisation ; les surfaces de l'élément (1) et de la pellicule (2) qui sont destinées à venir au contact du film intermédiaire (3) étant au préalable chauffées à une température inférieure à la température de ramollissement de la matière qui les constitue.

2. Procédé selon la revendication 1, permettant la fabrication en continu d'articles composites à partir de l'élément de matière plastique (1) et de la pellicule métallisée (2) se présentant sous forme de bandes continues séparées, caractérisé en ce que :

— on déroule simultanément l'élément (1) et la pellicule métallisée (2) et on les fait circuler entre des cylindres de calandrage (33, 34), la face non métallisée de la pellicule (2) étant en regard de l'élément en bande (1),

— et on extrude un film de matière plastique (3) continu qu'on insère entre l'élément (1) et la face non métallisée de la pellicule (2) en le maintenant à une température au moins égale à son point de ramollissement,

— en suite de quoi on opère le thermoformage et la découpe de la bande composite pour obtenir les articles.

3. Procédé selon l'une quelconque des revendications 1 et 2, caractérisé en ce que l'élément (1) en matière plastique est du polystyrène expansé tandis que la pellicule métallisée (2) est un film de polystyrène biorienté (2a) revêtu d'une couche d'aluminium (2b) et d'une épaisseur d'environ 25 μ.

4. Procédé selon la revendication 3, caractérisé en ce que le film intermédiaire (3) est également constitué par du polystyrène d'une épaisseur d'environ 30 μ.

5. Procédé selon l'une quelconque des revendications 2 à 4, caractérisé en ce que, pour l'opération de calandrage :

— on chauffe au moins le cylindre (34) en contact avec la couche d'aluminium (2b) à une température comprise entre 90° et 110 °C,

— on règle l'écartement entre les cylindres (33, 34) à une dimension légèrement inférieure à l'épaisseur de l'élément de polystyrène expansé (1),

— et on exerce entre les cylindres (33, 34) une pression comprise entre 4 et 5 bars.

6. Procédé selon la revendication 5, caractérisé en ce que la filière de l'extrudeuse du film intermédiaire (3) est maintenue à une température comprise entre 225° et 240 °C.

7. Procédé selon l'une quelconque des revendications 5 et 6, caractérisé en ce que l'écartement entre la sortie de la filière (23) et la zone de contact entre l'élément et la pellicule aluminisée (2) est inférieur à 5 centimètres.

8. Machine pour mettre en œuvre le procédé selon l'une quelconque des revendications 1 à 7 comportant :

— une calandre (20) constituée d'au moins deux cylindres (33, 34) tournant en sens contraire,

— des moyens pour alimenter la calandre :

— d'une part, en matière plastique expansée (1) se présentant sous forme d'une bande défilante (16),

— d'autre part, en pellicule métallisée (2) sur une face se présentant également sous forme d'une bande défilante (27),

caractérisée en ce que la machine comporte en outre des moyens pour introduire dans la calandre (20) et entre l'élément expansé (16) et la face non métallisée de la pellicule (27), le film intermédiaire (40) de matière plastique compatible avec l'élément expansé (16) et la pellicule (27) afin de réaliser leur solidarisation.

9. Machine selon la revendication 8, caractérisée en ce que les moyens pour délivrer le film intermédiaire (40) sont constitués par une extrudeuse (22) alimentant une filière plate (23) dont l'orifice de sortie est sensiblement rectangulaire, la longueur de ladite filière (23) s'étendant dans une direction parallèle aux axes des cylindres (33, 34) et étant au moins égale à la largeur de la bande de matière plastique expansée (16) et de la pellicule métallisée (27).

10. Machine selon la revendication 9, caractérisée en ce que l'orifice de sortie de l'extrudeuse (22) est situé sensiblement dans un plan perpendiculaire au plan contenant les axes des cylindres de la calandre (20) et passant entre les deux cylindres.

11. Machine selon les revendications 9 et 10 prises ensemble, caractérisée en ce que l'orifice de sortie de la filière plate (23) est situé à moins de cinq centimètres de la zone de contact entre la bande de matière plastique expansée (16) et la pellicule métallisée (27).

12. Machine selon l'une quelconque des revendications 8 à 11, caractérisée en ce qu'elle comporte, en amont de la zone d'introduction dans la calandre (20) :
— des moyens (31) pour chauffer la face de la bande de matière plastique expansée (16) tournée vers la pellicule métallisée, à une température comprise entre 80° et 90 °C,
— des moyens (32) pour chauffer la face non métallisée (29) de la pellicule à une température comprise entre 70° et 85 °C.

13. Machine selon l'une quelconque des revendications 8 à 12, caractérisée en ce que le cylindre (34) de la calandre (20) en contact avec la pellicule métallisée (27) est chauffé à une température comprise entre 94° et 104 °C.

14. Machine selon l'une quelconque des revendications 8 à 13, caractérisée en ce que le cylindre (33) de la calandre (20) en contact avec la bande de matière plastique expansée (16) est refroidi par une circulation de fluide.

15. Machine selon l'une quelconque des revendications 9 à 11, caractérisée en ce que la température de la filière (23) est maintenue à une température comprise entre 225° et 240 °C.

16. Machine selon l'une quelconque des revendications 9 à 11, caractérisée en ce que les lèvres longitudinales (45, 46) de la filière (23) sont réglables pour permettre un ajustement de la largeur de sortie de la filière.

17. Machine selon l'une quelconque des revendications 8 à 16, caractérisée en ce que des moyens (36, 37, 38) sont prévus pour régler l'écartement entre les cylindres de la calandre (20) et exercer par leur intermédiaire une pression sur le ruban en train de se constituer.

18. Machine selon l'une quelconque des revendications 8 à 17, comportant en outre, en amont de la calandre (20) :
— une extrudeuse (10) de matière plastique expansée délivrant la bande sous forme tubulaire (15),
— un outil (14) d'ouverture du tube extrudé le long d'une génératrice supérieure afin d'obtenir une bande déployée à plat (16),
— des organes d'acheminement (19) de la bande déployée (16) de telle sorte que la paroi externe du tube vienne en contact avec un des cylindres (33, 34) de la calandre (20),
— un rouleau (26) de pellicule métallisée (27) associé à des moyens (30) d'acheminement de la pellicule en direction de la calandre (20) de telle sorte que la couche métallique (28) vienne en contact avec le cylindre correspondant (34) de la calandre (20), et en aval de la calandre :
— au moins une unité de découpage (21b) du ruban composite afin d'obtenir les articles séparés.

## Claims

1. Process for manufacture of a composite article in particular a pan for packing of perishable products, comprising an element (1) in plastic material and a pellicle of plastic material (2) with a single metallized surface, the element (1) and the pellicle (2) being assembled by heat calendering, wherein the bonding of the element (1) to the non-metallized surface of the pellicle (2) is carried out in interposing between them an intermediate film (3) of plastic material maintained at a temperature insuring at least superficially its softening and providing adhesion of the film (3) with the material of the element (1) and of the pellicle (2), pressure being exerted in the bonding zone ; the surfaces of the element (1) and of the pellicle (2) which are intended to contact the intermediate film (3) being previously heated to a temperature lower than the softening temperature of the material of which they are composed.

2. The process of claim 1 unabling the continuous manufacture of composite articles from the element of plastic material (1) and the aluminized pellicle (2) in the form of continuous separated bands wherein :
— the element (1) and the metallized pellicle (2) are unwound simultaneously and are circulated between calendering cylinders (33, 34) the non-metallized surface of the pellicle (2) opposite the element band (1),
— a composite film of plastic material (3) is extruded and inserted between the element (1) and the non-metallized surface of the pellicle (2) while maintaining said film at a temperature at least equal to its softening point,
— following which thermoforming and cutting of the composite band are carried out in order to obtain the articles.

3. The process of any of claims 1 and 2, wherein the plastic material of the element (1) is expanded polystyrene whereas the metallized pellicle (2) is a film of bidirectional polystyrene (2a) coated with a layer of aluminium (2b) and having approximately 25 $\mu$ thickness.

4. The process of claim 3, wherein the intermediate film (3) is also composed of polystyrene of an approximately 30 $\mu$ thickness.

5. The process of any of claims 2 to 4, wherein for the calendering operation :
— at least the cylinder (34) in contact with the aluminium layer (2b) is heated to a temperature of between 90° and 110 °C,
— the distance between the cylinders (33, 34) is adjusted to a size slightly less than the thickness of the expanded polystyrene element (1),
— and pressure of between 4 and 5 bars is exerted between the cylinders (33, 34).

6. The process of claim 5, wherein the head of the intermediate film (3) extruder is maintained at a temperature of between 225° and 240 °C.

7. The process of any of claims 5 and 6, wherein the distance from the output of the head (23) and the contact zone between the element and the aluminized pellicle (2) is less than 5 centimeters.

8. A machine for carrying out the process of any of claims 1 to 7 comprising :
— a calender (20) composed of at least two cylinders (33, 34) turning in opposite directions,
— means for feeding the calender ;
— on the one hand with expanded plastic material (1) in the form of an unwinding band (16),
— on the other hand with a pellicle metallized (2) on one surface also in the form of an unwinding band (27),
wherein the machine comprises in addition :
— means for introducing into the calender (20) and between the expanded element (16) and the non-metallized surface of the pellicle (27) the intermediate film (40) of plastic material compatible with the expanded element (16) and the pellicle (27) so as to effect their bonding.

9. The machine of claim 8, wherein the means for delivering the intermedate film (40) are composed of an extruder (22) feeding a flat head (23) whose output port is practically rectangular, the length of said head (23) extending in a direction parallel to the axes of the cylinders (33, 34) and being at least equal to the width of the band of expanded plastic material (16) and the metallized pellicle (27).

10. The machine of claim 9, wherein the output port of the extruder (22) is situated practically in a plan perpendicular to the plane containing the axes of the cylinders of the calender (20) and passing between the two cylinders.

11. The machine of claims 9 and 10 taken together, wherein the output port of the flat head (23) is situated at at least 5 centimeters from the contact zone between the band of expanded plastic material (16) and the metallized pellicle (27).

12. The machine of any of claims 8 to 11, wherein the machine comprises, upstream from the zone of introduction into the calender (20) :
— means (31) for heating the expanded plastic material band (16) on the surface turned towards the metallized pellicle to a temperature of between 80° and 90 °C,
— means (32) for heating the non-metallized surface (29) of the pellicle to a temperature of between 70° and 85 °C.

13. The machine of any of claims 8 to 12, wherein the cylinder (34) of the calender (20) in contact with the metallized pellicle (27) is heated to a temperature of between 94° and 104 °C.

14. The machine of any of claims 8 to 13, wherein the cylinder (33) of the calender (20) in contact with the band of expanded plastic material (16) is cooled by circulation of fluid.

15. The machine of any of claims 9 to 11, wherein the temperature of the head (23) is maintained at a temperature of between 225° and 240 °C.

16. The machine of any of claims 9 to 11, wherein the longitudinal lips (45, 46) of the head (23) are adjustable to allow an adjustment of the width of output from the head.

17. The machine of any of claims 8 to 16, wherein means (36, 37, 38) are provided for adjusting the distance between the cylinders of the calender (20) and for exerting, through the intermediary of said means, pressure on the ribbon being constituted.

18. The machine of any of claims 8 to 17, further comprising, upstream from the calender (20) :
— an expanded plastic material extruder (10) delivering the band in tubular form (15),
— a tool (14) for opening the extruded tube along an upper generator in order to obtain a band which is spread out flat (16),
— components (19) for conveying the spread out band (16) in such a manner that the exterior wall of the tube comes into contact with one of the cylinders (33, 34) of the calender (20),
— a roll (26) of metallized pellicle (27) connected to means (30) for conveying the pellicle in the direction of the calender (20) in such a manner that the metallic layer (28) comes into contact with the corresponding cylinder (34) of the calender (20), and downstream from the calender :
— at least one unit (21b) for cutting the composite ribbon in order to obtain separate articles.

**Ansprüche**

1. Verfahren zur Herstellung eines Kompositen Artikels, inbesondere einer Schale zur Verpackung verderblicher Produkte aus eimem Element (1) aus Plastik und aus eimem Film aus Plastik (2) dessen eine Seite metalisiert ist, und nach dem das Element (1) und der Film (2) durch heisses Verrolen verbunden werden, dadurch gekennzeichnet, das der Verbund zwischen dem Element (1) und der nicht metalisierten Seite des Films (2) durch Zwischenlegung eines Zwischenfilms aus Plastik (3) durchgeführt wird wobei der Zwischenfilm (3) an einer Temperatur gehalten wird, die sein oberflächliches Erweichen hervorruft und ein Verbinden des Film (3) mit dem Stoff des Elements (1) und mit dem des Filmes (2) erlaubt, und ein Druck auf die Verbundzone ausgeübt wird ; die Seiten des Elements (1) und des Films (2), die in Kontakt gebracht werden sollen, sind in voraus auf eine Temperatur erhitzt worden, die niedriger ist als die Erweichungstemperatur der betreffenden Materialen.

2. Verfahren nach Anspruch 1 sur Herstellung von Kompositen Artikeln aus dem Plastikelement (1) und dem metalisierten Film (2) in dem das Element und der Film aus Bändern ohne Ende bestehen, dadurch gekennzeichnet, dass man gleichzeitig das Element (1) und den metalisierten Film (2) abrollt und sie zwischen Rollen (33, 34) führt wobei sich die nicht metalisierte Seite des Films (2) gegenüber dem Band des Elements (1) befindet, dass man den Plastikfilm (3) auszieht, und ihn zwischen das Element (1) und die nicht metalisierte Seite des Films (2) führt wobei er an einer Temperatur gehalten wird, die mindestens seinem Erweichungspunkt entspricht und dass man danach die Heissverforming und das Abscheiden des Kompositen Bandes durchführt, um die Artikel herzustellen.

3. Verfahren nach einem der Ansprüche 1 und 2, dadurch gekennzeichnet dass das Plastikelement (1) aus expansierten Polystyrol ist während der metalisierte Film (2) ein Film aus biorientiertem Polystyrol (2a) ist der mit einer Aluminiumschicht (2b) von einer Dicke von etwa 25 µ versehen ist.

4. Verfahren nach Anspruch 3, dadurch gekennzeichnet, dass der Zwischenfilm (3) ebenfalls aus Polystyrol von einer Kicke von etwa 30 µ ist.

5. Verfahren nach einem der Ansprüche 2 bis 4, dadurch gekennzeichnet dass man zum Verrollen wenigstens die Rolle (34), die mit der Aluminiumschicht (2b) in Kontakt kommt, auf eine Temperatur von 90 °C bis 110 °C erhitzt, dass man den Spalt zwischen den Rollen (33, 34) auf eine etwas kleiner als die Dicke des Elements aus expansierten Polystyrol (1) Grösse regelt und dass der Druck zwischen den Rollen 4 bis 5 bars beträgt.

6. Verfahren nach Ansprüch 5, dadurch gekennzeichnet, dass das Mundstück des Zwischenfilms (3) auf einer Temperatur zwischen 225 °C und 240 °C gehalten wird.

7. Verfahren nach einem der Ansprüche 5 und 6, dadurch gekennzeichnet, dass der Abstand zwischen dem Ausgang des Mundstüchs (23) und der Kontaktzone zwischen dem metalisierten Film (2) und dem Element (1) kleiner als 5 cm ist.

8. Maschine zum Ausführen des Verfahrens nach einem der Ansprüche 1 bis 17, mit
— einem Rollenzug (20) bestehend aus weningstens zwei Rollen (33, 34) die sich in entgegengesetzte Richtungen drehen,
— Mitteln zum Belieferns des Rollenzugs :
— einerseits mit einem expandierten Plastikmaterial (1) in Form eines abgerollten Bandes (16) und
— andererseits mit einem auf einer Seite metalisierten Film (2) in Form eines abgerollten Bandes (27)
dadurch gekennzeichnet, dass die Maschine Mittel besitzt, um in den Rollenzug (20) und zwischen das Element (16) und der nicht metalisierten Seite des Films (27), den Zwischenfilm (40) einzubringen, der aus einem mit dem expansierten Element (16) und mit dem Film (27) compatiblem Plastikmaterial besteht, um die beiden letzten Elemente zu verbinden.

9. Maschine nach Anspruch 8, dadurch gekennzeichnet, dass die Mittel zum Beliefern des Zwischenfilms (40) aus einem Extruder (22) bestehen, der ein flaches, mit einer rechteckeiger Ausgangsöffnung versehenes Mundstück hat, dessen Längsachse sich parallel zu den Achsen der Rollen (33, 34) erstreckt und dessen Länge wenigstens der Breite des Bandes aus expandiertem Plastikmaterial (16) und des metalisierten Films (27) entspricht.

10. Maschine nach Anspruch 9, dadurch gekennzeichnet, dass sich die Augangsöffnung des Extruders (22) in einer Ebene erstreckt, die perpendilär zu der Ebene ist, in der die Achsen der Rollen des Rollenzugs (20) liegen und die zwischen den Rollen liegt.

11. Maschine nach den Ansprüche 9 und 10, dadurch gekennzeichnet, dass die Ausgangsöffnung des flachen Mundstücks (23) mindestens 5 cm Abstand von der Kontaktzone zwischen dem expandierten Plastikband (16) und dem metalisierten Film (27) hat.

12. Maschine nach einem der Ansprüche 8 bis 11, dadurch gekennzeichnet, dass sie vor des Eingangszone des Rollenzugs (20)
— Mittel (31) zum Erhitzen der dem metalisierten Film zugewendeten Seite des Bandes aus expandierten Plastikmaterial (16) an eine Temperatur von 80 °C bis 90 °C und
— Mittel (32) zum Erhitzen der nicht metalisierten Seite (29) des Films (27) bis zu einer Temperatur von 70 °C bis 85 °C, besitzt.

13. Maschine nach einem der Ansprüche 8 bis 12, dadurch gekennzeichnet, dass die Rolle (34) des Rollenzugs (20), die mit dem metalisierten Film (27) in Kontakt steht, auf eine Temperatur von 94 °C bis 104 °C erhitzt wird.

14. Maschine nach einem der Ansprüche 8 bis 13, dadurch gekennzeichnet, dass die Rolle (33) des Rollenzugs (20), die mit dem Band aus expandiertem Plastikmaterial (16) in Kontakt steht, durch einen Kühlstoff gekühlt wird, der gazförmig oder flüssig ist.

15. Maschine nach einem der Ansprüche 9 bis 11, dadurch gekennzeichnet, dass die Temperatur des Mundstücks (23) auf einem Wert von 225 °C bis 240 °C gehalten wird.

16. Maschine nach einem der Ansprüche 9 bis 11 dadurch gekennzeichnet, dass die Längslippen (45, 46) des Mundstücks (23) regelbar sind, um die Breite der Ansgangsöffnung zu verändern.

17. Maschine nach einem der Ansprüche 8 bis 16 dadurch gekennzeichnet, dass sie Mittel (36, 37, 38) zur Steuerung des Abstands zwischen den Rollen des Rollenzugs (20) besitzt, um einen Druck auf das sich bildende Band auszuüben.

18. Maschine nach einem der Ansprüche 8 bis 17, dadurch gekennzeichnet, dass sie zusätzlich vor dem Rollenzug (20) folgende Mittel besitzt :
— ein Extruder (10) für das expandierte Plastikmaterial, der ein röhrenformiges Band (15) liefert,

— ein Werkzeug (14) zum Aufschneiden des Rohrs (15) längs seiner Achse, um ein flaches Band (16) zu erhalten,

— Transportorgane (19) für das flache Band, die die äussere Wand des Rohres mit einer der Rollen (33, 34) des Rollenzugs (20) in Kontakt bringen,

— ein Rolle (26) von metalisierten Film (27) mit Transportmitteln (30) um den Film zum Rollenzug zuführen so, dass die Metalschicht (28) mit der entsprechenden Rolle (34) des Rollenzugs (20) in Kontakt kommt, hinter dem Rollenzug ist wenigstens eine Schneideeinheit (21b) für das Komposite Band vorgesehen um einzelne Artikel zu erhalten.

**FIG_1**

**FIG_2**

**FIG_6**

**FIG_7**

FIG_3

FIG_4

FIG_5